(19) **Europäisches Patentamt**
**European Patent Office**
**Office européen des brevets**

(11) **EP 3 579 366 A1**

(12) **EUROPEAN PATENT APPLICATION**

(43) Date of publication:
**11.12.2019 Bulletin 2019/50**

(51) Int Cl.:
**H02J 3/00** (2006.01)

(21) Application number: **18176823.5**

(22) Date of filing: **08.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventor: **Dzafic, Izudin**
**71000 Sarajevo (BA)**

(54) **METHOD AND APPARATUS FOR CONTROL OF AN ELECTRIC GRID**

(57)     The invention describes a method for control of an electrical energy network, including a step of Calculation of a state estimation signal for the electrical energy network,
characterized in that
the calculation is performed using a weighted least squares optimization with complex variables.

   It is a further objective of the invention to present an apparatus suitable to perform the inventive method.

FIG 1

EP 3 579 366 A1

**Description**

Electrical energy networks such as distribution or transmissions grid need to controlled accurately to assure safe and reliable delivery of electrical energy. Typical Supervisory Control and Data Acquisition (SCADA) systems are installed as central control mechanisms. They provide an overview of the current situation in the network to operators. Such an overview of the situation usually includes a state estimation of the grid based on measurements of currents and voltages at various locations, respectively nodes, in the electrical network. More recently it has been attempted to include time-synchronized measurements of phasor measurement units. These measurements additionally include phase angles of current and voltages measured. Control signals which control controllable equipment in the grid can be computed, for example to avoid strong deviations from default voltages and possible outages.

Abstract-Power system state estimation is classically formulated as a weighted least squares (WLS) optimization problem over the real domain, with the state variables being the voltage magnitudes and angles or the voltage real and imaginary parts.

The alternating current (AC) power flow equations are naturally defined in complex variables, mainly the phasor nodal voltages. Given that a complex number can be represented by a pair of real numbers, the power system state estimator implementations transform complex variables into real variables and employ real number optimization algorithms to iteratively compute the state vector. Classical state estimators employ legacy measurements, telemetered through the supervisory control and data acquisition (SCADA) infrastructure; these measurements include real and reactive power flows and injections, and the magnitudes of voltages and currents. The measurement of synchronized phasors has immediate benefits on the accuracy of the state estimation of the power system; a phasor measurement unit (PMU) can currently report phasor voltages and currents at rates up to half the nominal system frequency [1]. In the prevailing operational practice, state estimators are expected to handle both SCADA and PMU measurements. Several approaches have been reported for integrating phasor measurements in traditional state estimation methods, with the variations mostly related to the specificities of handling the phasor current measurements.

It is the aim of the invention to provide a method for state estimation of an electrical energy network that can be implemented comparatively easy and at the same time can be computed comparatively faster than previous methods.

The invention as described in claim 1 solves this problem by providing a solution in the complex domain. This has not been done in the field so far, even though the voltages in AC networks are complex variables. This is because a real function of complex variables is non-analytic in its arguments, i.e. the Taylor series expansion in its arguments alone does not exist.

By making use of Wirtinger calculus, the invention presents a new implementation of the weighted least squares (WLS) state estimation problem in complex variables. The partial derivatives employed in the method give rise to a structure that is very simple to implement. The method can straightforwardly handle both legacy and phasor measurements; particularly the processing of phasor current measurements does not require any special provisions, unlike previously reported hybrid state estimator implementations over the real domain.

The inventive method has two main advantages over the state of the art: first, is more precise than previous methods and second, it is much faster than current models when more and more phasor measurements are added the considered data set.

In a preferred and advantageous embodiment of the inventive method, the weighted least squares optimization uses Wirtinger calculus. This is an advantage, because Wirtinger Calculus can be applied to expand the real-valued measurement function in terms of nodal voltage phasors. It also allows for definition of optimal conditions of the least squares problem. Taken together, with Wirtinger Calculus a generalization of the power system weighted least squares estimation algorithm from real variables to complex variables can be achieved.

In a preferred and advantageous embodiment of the inventive method, measurements from phasor measurement units are directly included as complex variables in the weighted least squares optimization. This approach allows for a rather simple combination of real and complex variables in a hybrid (with real and complex measurement values) estimation system.

In a preferred and advantageous embodiment of the inventive method, additional steps are performed:

-    Computation of control signals for controllable equipment in the electrical energy network based on the state estimation signal,
-    Sending the control signals to the controllable equipment,
-    controlling the controllable equipment with the control signals to operate the electrical energy network. This embodiment is advantageous, because the improved and more accurate state estimation signal is applied to control the energy network.

It is a further aim of the invention to provide an apparatus for state estimation of an electrical energy network which is suitable for applying the method as laid out above. Preferred and Advantageous embodiments of the inventive apparatus are described in dependant claims 6 to 9.

To clarify the invention in more detail, a detailed example of the inventive method is provided in the following sections.

The example is illustrated by three figures.

Figure 1 shows      a flow chart for several steps of a complex Gauss-Newton Algorithm, and

Figure 2 shows      a schematic branch model of a node in an electrical network, and

Figure 3 shows      a schematic representation of a node in an electrical network.

Numerical results are reported on networks with up to 9241 nodes, and they demonstrate that the accuracy of the complex variable implementation is competitive with that of the real variable constrained hybrid state estimator, while being significantly faster.

NOMENCLATURE

| | |
|---|---|
| $c(x, \overline{x})$ | Vector of complex-valued meausrement functions. |
| $d(x, \overline{x})$ | Vector of real-valued meausrment functions. |
| $G$ | Complex gain matrix. |
| $h(x, \overline{x})$ | Vector of meausrment functions. |
| $H$ | Matrix of Jacobian and conjugate Jacobian elements. |
| $i_{ij}$ | Branch current flow from node $i$ to node $j$. |
| $m$ | Number of measurements. |
| $n$ | Number of elements in the state vector. |
| $P_i$, $Q_i$, $S_i$ | Real, reactive, and complex power injections at node $i$. |
| $P_{ij}$, $Q_{ij}$, $S_{ij}$ | Real, reactive, and complex power flows from node $i$ to node $j$. |
| $r$ | Column vector of complex measurement residuals. |
| $u$ | Column vector of phasor nodal voltages. |
| $W$ | Diagonal matrix of measurement weights. |
| $x$ | Complex state column vector. |
| $\overline{x}$ | Complex conjugate of $x$. |
| $x^T$ | Transpose of $x$. |
| $\overline{x}^T$ | Conjugate transpose of $x$. |
| $x_k$ | Element $k$ of $x$. |
| $x_k^{re}$, $x_k^{im}$ | Real and imaginary parts of the complex variable $x_k$. |
| $|x_k|$ | Magnitude of $x_k$. |
| $z$ | Vector of complex measurement values. |

## 1. INTRODUCTION

This example shows that the development of a hybrid weighted least squares (WLS) state estimator in complex numbers is simple to implement and can easily handle complex valued measurements; in addition, it retains the estimation accuracy of the real number algorithm while having very fast execution time. The state estimation formulations that work with real number algorithms have their state vector of phasor voltages expressed either in rectangular coordinates or polar coordinates [2]. In systems where estimation is based only on phasor measurements, the rectangular model is preferable as it results in fully linear measurement functions [3]-[6]. The use of PMUonly estimation is currently not feasible for most practical systems, and the hybrid estimation based on the polar coordinates model remains as the more applicable solution; in this setting, the inclusion of phasor current measurements poses special challenges in the implementation for which two types of solutions have been proposed: non-invasive and direct. The non-invasive methods assume that the system is observable with SCADA measurements; they operate by combining the SCADA state vector with the PMU measurements either using linear WLS [7]-[10] or state fusion techniques [11], [12]. The direct methods combine the SCADA and PMU measurements into one vector of measurement functions, and therefore do not place any restrictions on observability being solely achieved either by SCADA or by PMU systems; the phasor current representation in direct methods can be viewed either in rectangular [13] or polar coordinates [14]. Alternatively, the state vector can be expanded to include the magnitude and angle of the measured phasor currents in a constrained state estimation formulation; the constrained estimator is competitive with formulations based on the traditional state vector [15]. A concern common to all hybrid state estimation formulations is the different refresh rates of PMU and SCADA systems, leading to non-coincident measurements; this has been dealt with using SCADA state reconstruction in WLS [16], or by adopting a weighted least absolute value method at time instants where PMU and SCADA measurements are nonsimultaneously refreshed [17]. This invention presents a new implementation of the WLS state estimator in complex variables, thus facilitating the direct inclusion of PMU measurements in the hybrid estimator. A SCADA measurement corresponds to a real function in terms of the complex nodal voltage phasors, and is therefore non-analytic in its argument; this means that the measurement function does not have a Taylor series expansion in terms of the voltage phasors alone [18]. Although not widely known, the real-valued measurement function can be expanded via Wirtinger calculus in terms of the nodal voltage phasors and their conjugates; the Wirtinger derivatives can be also used to define the optimality conditions of the least squares problem [19]-[22]. The result is a generalization of the popular power system WLS estimation algorithm from the domain of real variables to that of complex variables. This extension is usable in existing approaches for handling time skew [16], [17], and in applications that involve bad data estimation [23], real-time external equivalents [24], and distributed estimation [25].

The rest of this example is organized as follows. Section II reviews the fundamentals of the Wirtinger calculus. Section III presents a theorem whose conditions allow a simple extension of the Gauss-Newton algorithm from the real to the complex domain, and Section IV demonstrates its applicability to hybrid state estimation in complex variables. Numerical results are given in Section V, which includes comparisons with the constrained state estimator in [15]. The example is concluded in Section VI. The final section of the example includes the expressions of the terms in the Jacobian and conjugate Jacobian matrices.

## II. WIRTINGER CALCULUS

The equations governing the steady-state operation of the AC network are expressed in the frequency domain, where voltages and currents are given as phasors. Power system state estimation via WLS requires the computation of the Taylor series expansion of real-valued measurement functions; this is however not possible in terms of the complex variables. In fact, the Cauchy-Reimann conditions affirm that a nonconstant real-valued function of a complex variable $f(x_k)$ is not analytic in $x_k$, i.e. it cannot be expanded in a convergent Taylor series in $x_k$ alone [18], [22]. To circumvent this issue, the optimization of a WLS objective function is normally carried out over the real domain by perceiving the measurement function f as a function of the real and imaginary components of

$$x_k: \quad f(x_k) = f(x_k^{re}, x_k^{im})$$

for the single complex variable case. In power system optimization applications,

$$f(x_k^{re}, x_k^{im})$$

is differentiable as a function of the real variables

$$x_k^{re} \text{ and } x_k^{im}.$$

By noting that:

$$x_k^{re} = \frac{1}{2}(x_k + \bar{x}_k)$$
$$x_k^{im} = \frac{i}{2}(\bar{x}_k - x_k)$$

$$(1)$$

it follows that *J* can be also expressed in function of the complex variable and its conjugate: $f(x_k^{re}, x_k^{im})$ ,

A key observation here is that if J is analytic in the space spanned by $x_k^{re}$ and $x_k^{im}$, it is also analytic in $\boldsymbol{x}_k$ for fixed $\bar{\boldsymbol{x}}_k$ and analytic in $\bar{\boldsymbol{x}}_k$ for fixed $\boldsymbol{x}_k$. This observation is the basis of the Wirtinger calculus [18]-[22], which allows defining the partial derivatives of a complex- or real-valued non-analytic function (in $\boldsymbol{x}_k$) as follows:

$$\frac{\partial f}{\partial x_k} = \frac{\partial f}{\partial x_k^{re}}\frac{\partial x_k^{re}}{\partial x_k} + \frac{\partial f}{\partial x_k^{im}}\frac{\partial x_k^{im}}{\partial x_k} = \frac{1}{2}\left(\frac{\partial f}{\partial x_k^{re}} - i\frac{\partial f}{\partial x_k^{im}}\right) \quad (2)$$

$$\frac{\partial f}{\partial \bar{x}_k} = \frac{\partial f}{\partial x_k^{re}}\frac{\partial x_k^{re}}{\partial \bar{x}_k} + \frac{\partial f}{\partial x_k^{im}}\frac{\partial x_k^{im}}{\partial \bar{x}_k} = \frac{1}{2}\left(\frac{\partial f}{\partial x_k^{re}} + i\frac{\partial f}{\partial x_k^{im}}\right) \quad (3)$$

Note that $\frac{\partial f}{\partial x_k}$ treats $\bar{x}_k$ as a constant in $f(x_k, \bar{x}_k)$, and $\frac{\partial f}{\partial \bar{x}_k}$ treats $x_k$ as a constant in $f(x_k, \bar{x}_k)$, Equations (2) and (3) also give the following properties:

$$\frac{\partial x_k}{\partial x_k} = \frac{\partial \bar{x}_k}{\partial \bar{x}_k} = 1; \quad \frac{\partial x_k}{\partial \bar{x}_k} = \frac{\partial \bar{x}_k}{\partial x_k} = 0 \quad (4)$$

With the partial derivatives (2) and (3), it becomes possible to define the first-order complex Taylor series expansion:

$$f(x_k + \Delta x_k, \bar{x}_k + \Delta \bar{x}_k) \simeq f(x_k, \bar{x}_k) + \frac{\partial f}{\partial x_k}\Delta x_k + \frac{\partial f}{\partial \bar{x}}\Delta \bar{x}_k$$
$$= f(x_k, \bar{x}_k) + \left[\begin{array}{cc}\frac{\partial f}{\partial x_k} & \frac{\partial f}{\partial \bar{x}}\end{array}\right]\left[\begin{array}{c}\Delta x_k \\ \Delta \bar{x}_k\end{array}\right] \quad (5)$$

Because $f(x_k)$ is non-analytic in $x_k$, the Taylor series expansion in $\Delta \boldsymbol{x}_k$ alone does not exist. A. Multivariable Function Let x denote an ***n***-dimensional column vector of complex variables, and x its complex conjugate:

$$x = [x_1, \ldots, x_n]^T, \quad \bar{x} = [\bar{x}_1, \ldots, \bar{x}_n]^T \quad (6)$$

For a multivariable function f, (2) and (3) generalize to using the co-gradient and conjugate co-gradient Operators [18], [22] :

$$\nabla_x f(x, \bar{x}) = \left[ \begin{array}{c} \frac{\partial f}{\partial x_1} \\ \vdots \\ \frac{\partial f}{\partial x_n} \end{array} \right] = \left[ \begin{array}{c} \frac{1}{2}\left( \frac{\partial f}{\partial x_1^{re}} - i \frac{\partial f}{\partial x_1^{im}} \right) \\ \vdots \\ \frac{1}{2}\left( \frac{\partial f}{\partial x_n^{re}} - i \frac{\partial f}{\partial x_n^{im}} \right) \end{array} \right] \qquad (7)$$

$$\nabla_{\bar{x}} f(x, \bar{x}) = \left[ \begin{array}{c} \frac{\partial f}{\partial \bar{x}_1} \\ \vdots \\ \frac{\partial f}{\partial \bar{x}_n} \end{array} \right] = \left[ \begin{array}{c} \frac{1}{2}\left( \frac{\partial f}{\partial x_1^{re}} + i \frac{\partial f}{\partial x_1^{im}} \right) \\ \vdots \\ \frac{1}{2}\left( \frac{\partial f}{\partial x_n^{re}} + i \frac{\partial f}{\partial x_n^{im}} \right) \end{array} \right] \qquad (8)$$

The corresponding first-order complex Taylor series expansion 1s:

$$f(x + \Delta x, \bar{x} + \Delta \bar{x}) \simeq f(x, \bar{x}) + \left[ \begin{array}{cc} \nabla_x f^T & \nabla_{\bar{x}} f^T \end{array} \right] \left[ \begin{array}{c} \Delta x \\ \Delta \bar{x} \end{array} \right] \qquad (9)$$

III. GAUSS-NEWTON METHOD IN COMPLEX VARIABLES

Consider the following nonlinear inverse problem, which requires finding an approximate solution to z:

$$h(x, \bar{x}) \approx z \qquad (10)$$

where the multivariable complex state vector is given by (6), $h(x,\bar{x})$ is a vector containing m known complex valued functions where each is analytic in the space spanned by x and $\bar{x}$, and z is a vector containing m known complex numbers:

$$h(x, \bar{x}) = \left[ \begin{array}{c} h_1(x, \bar{x}) \\ \vdots \\ h_m(x, \bar{x}) \end{array} \right], \quad z = \left[ \begin{array}{c} z_1 \\ \vdots \\ z_m \end{array} \right] \qquad (11)$$

The Gauss-Newton method for solving the inverse problem (10) requires iterative linearization of (10) at the current estimate of the state vector [x*;x*], followed by minimizing the linearized least squares problem [22]. By using (9), the linearized inverse problem can be written as:

$$h(x^*, \bar{x}^*) + H \left[ \begin{array}{c} \Delta x \\ \Delta \bar{x} \end{array} \right] \approx z \qquad (12)$$

where H is formed of the Jacobian and conjugate Jacobian matrices evaluated at [x*;$\bar{x}$*]:

$$H = \begin{bmatrix} \nabla_x h_1^T & \nabla_{\bar{x}} h_1^T \\ \vdots & \vdots \\ \nabla_x h_m^T & \nabla_{\bar{x}} h_m^T \end{bmatrix}$$

$$= \begin{bmatrix} \frac{\partial h_1}{\partial x_1} & \cdots & \frac{\partial h_1}{\partial x_n} & \frac{\partial h_1}{\partial \bar{x}_1} & \cdots & \frac{\partial h_1}{\partial \bar{x}_n} \\ \vdots & \ddots & \vdots & \vdots & \ddots & \vdots \\ \frac{\partial h_m}{\partial x_1} & \cdots & \frac{\partial h_m}{\partial x_n} & \frac{\partial h_m}{\partial \bar{x}_1} & \cdots & \frac{\partial h_m}{\partial \bar{x}_n} \end{bmatrix} \tag{13}$$

The least squares solution minimizes the WLS objective function:

$$\ell(x, \bar{x}) = \frac{1}{2} \left\| z - h(x^*, \bar{x}^*) - H \begin{bmatrix} \Delta x \\ \Delta \bar{x} \end{bmatrix} \right\|_W^2$$

$$= \frac{1}{2} \left( \bar{r} - \bar{H} \begin{bmatrix} \Delta \bar{x} \\ \Delta x \end{bmatrix} \right)^T W \left( r - H \begin{bmatrix} \Delta x \\ \Delta \bar{x} \end{bmatrix} \right) \tag{14}$$

where $\textbf{\textit{r=x-h(x*,\bar{x}*)}}$ is the vector of complex measurement residuals at $\textbf{\textit{[x*;\bar{x}*]}}$ and W is a diagonal weighting matrix with strictly positive elements. Because $W = (W^{\frac{1}{2}})^T (W^{\frac{1}{2}})$, it results in simple scaling of r and H. In the ensuing derivation, the objective (14) can be therefore rewritten as:

$$\ell(x, \bar{x}) = \frac{1}{2} \left( \bar{r} - \bar{H} \begin{bmatrix} \Delta \bar{x} \\ \Delta x \end{bmatrix} \right)^T \left( r - H \begin{bmatrix} \Delta x \\ \Delta \bar{x} \end{bmatrix} \right) \tag{15}$$

with the understanding that the effect of w is absorbed by r and H through the following assignments:

$$r \leftarrow W^{\frac{1}{2}} r, \quad H \leftarrow W^{\frac{1}{2}} H \tag{16}$$

Equation (15) can now be expanded into:

$$\ell = \frac{1}{2} \left( \bar{r}^T r - \bar{\beta}^T \begin{bmatrix} \Delta x \\ \Delta \bar{x} \end{bmatrix} - \begin{bmatrix} \Delta \bar{x}^T & \Delta x^T \end{bmatrix} \beta \right)$$

$$+ \frac{1}{2} \left( \begin{bmatrix} \Delta \bar{x}^T & \Delta x^T \end{bmatrix} G \begin{bmatrix} \Delta x \\ \Delta \bar{x} \end{bmatrix} \right) \tag{17}$$

where

$$\beta = \bar{H}^T r = \begin{bmatrix} \beta_{\bar{x}} \\ \beta_x \end{bmatrix} \tag{18}$$

$$G = \overline{H}^T H = \left[ \begin{array}{cc} G_{\overline{x}x} & G_{\overline{x}\overline{x}} \\ G_{x x} & G_{x \overline{x}} \end{array} \right] \qquad (19)$$

Theorem 1. Assume that G is of Juli-rank, and that the elements of G and β satisfy the following properties: $\beta_{\mathbf{x}}=\overline{\beta_{\mathbf{x}}}$, $G_{x\overline{x}} = \overline{G}_{\overline{x}x} = G^T_{\overline{x}x}$, and $\overline{G}_{x x} = G^T_{x x} = \overline{G}_{\overline{x}\overline{x}} = \overline{G}^T_{\overline{x}\overline{x}}$. Then the solution that minimizes (17) is given by:

$$\left[ \begin{array}{c} \Delta x \\ \Delta \overline{x} \end{array} \right] = G^{-1} \beta \qquad (20)$$

Proof]: With the above properties, (17) can be simplified to:

$$\ell = \frac{1}{2} \left( \overline{r}^T r - 2\beta_{\overline{x}}^T \Delta x - 2\beta_{\overline{x}}^T \Delta \overline{x} + \Delta x^T G_{xx} \Delta x + \Delta \overline{x}^T G_{\overline{x}\overline{x}} \Delta \overline{x} \right)$$
$$+ \frac{1}{2} \left( \Delta x^T G_{x\overline{x}} \Delta \overline{x} + \Delta \overline{x}^T G_{\overline{x}x} \Delta x \right) \qquad (21)$$

therefore

$$\nabla_{\Delta \overline{x}} \ell = -\beta_{\overline{x}} + G_{\overline{x}\overline{x}} \Delta \overline{x} + \frac{1}{2} \left( G_{x\overline{x}}^T \Delta x + G_{\overline{x}x} \Delta x \right)$$
$$= -\beta_{\overline{x}} + G_{\overline{x}x} \Delta x + G_{\overline{x}\overline{x}} \Delta \overline{x} \qquad (22)$$

$$\nabla_{\Delta x} \ell = -\beta_x + G_{xx} \Delta x + \frac{1}{2} \left( G_{x\overline{x}} \Delta \overline{x} + G_{\overline{x}x}^T \Delta \overline{x} \right)$$
$$= -\beta_x + G_{xx} \Delta x + G_{x\overline{x}} \Delta \overline{x} \qquad (23)$$

Setting (22) and (23) to zero, which is equivalent to (20), is necessary and sufficient to determine a stationary point of e [20]; the stationary point corresponds to a minimum due to the convexity of $\ell$. It remains to show that G and β are admissible, i.e. (20) would give an admissible solution with a pair of vectors that are indeed complex conjugates [22]. Towards this end, write (20) as:

$$\left[ \begin{array}{cc} G_{\overline{x}x} & G_{\overline{x}\overline{x}} \\ \overline{G}_{\overline{x}\overline{x}} & \overline{G}_{\overline{x}x} \end{array} \right] \left[ \begin{array}{c} \Delta x \\ \Delta y \end{array} \right] = \left[ \begin{array}{c} \beta_{\overline{x}} \\ \beta_x \end{array} \right] \qquad (24)$$

Taking the conjugate of (24) gives:

$$\begin{bmatrix} \overline{G}_{\overline{x}x} & \overline{G}_{\overline{x}\overline{x}} \\ G_{\overline{x}\overline{x}} & G_{\overline{x}x} \end{bmatrix} \begin{bmatrix} \Delta \overline{x} \\ \Delta \overline{y} \end{bmatrix} = \begin{bmatrix} \beta_x \\ \beta_{\overline{x}} \end{bmatrix} \qquad (25)$$

Now swapping the top n rows (as a single group) with the bottom n rows, and the first n columns with the last n columns gives:

$$\begin{bmatrix} G_{\overline{x}x} & G_{\overline{x}\overline{x}} \\ \overline{G}_{\overline{x}\overline{x}} & \overline{G}_{\overline{x}x} \end{bmatrix} \begin{bmatrix} \Delta \overline{y} \\ \Delta \overline{x} \end{bmatrix} = \begin{bmatrix} \beta_{\overline{x}} \\ \beta_x \end{bmatrix} \qquad (26)$$

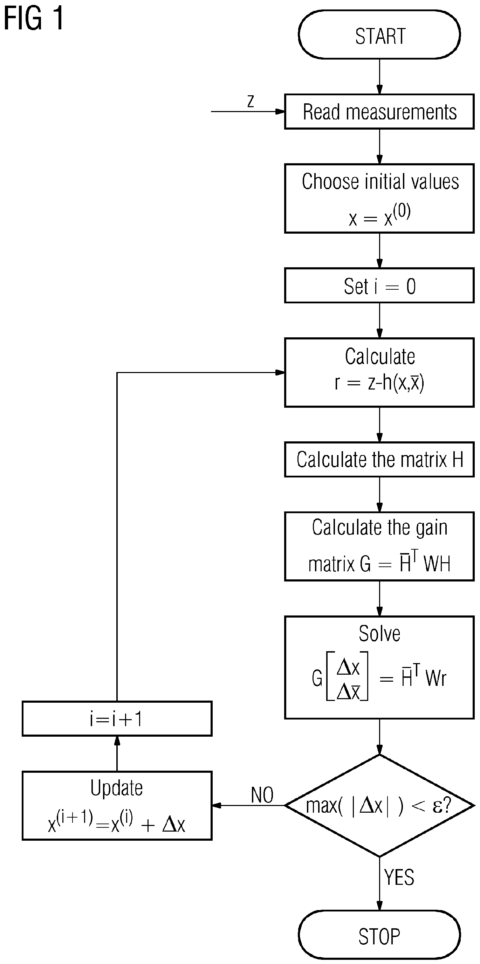

Subtracting (26) from (24) and solving gives $\Delta x = \Delta \overline{y}$ and $\Delta y = \Delta \overline{x}$, i.e. the solution vector in (20) is admissible.
Therefore under the assumptions postulated in Theorem 1, the complex Gauss-Newton method is very similar to the real Gauss-Newton method. Fig. 1 shows a flowchart of the complex Gauss-Newton algorithm, with the weighting matrix w explicitly represented in the update equations. The next section demonstrates that the power system state estimation problem, with both SCADA and PMU measurements, has a complex formulation that conforms to the assumptions in Theorem 1.

IV. HYBRID STATE ESTIMATION

In the context of power system state estimation, the state vector x comprises all phasor nodal voltages $u{:}[x;\overline{x}]=[u;\overline{u}]$. The measurement functions in (10) consist of: complex-valued measurements: complex power flows $(S_{ij})$ representing real and reactive power flow measurement pairs, complex power injections $(S_i)$ representing real and reactive power injection measurement pairs, phasor voltages $(u_i)$, and phasor currents $(i_{ij})$. Given that each complex-valued function has a real and an imaginary part, it can be equivalently represented by the complex quantity and its conjugate (note that functions involving complex conjugation also fail to satisfy the Cauchy-Reimann conditions [22]). For instance, the real and reactive power injection measurements $P_i$ and $Q_i$ are equivalently represented as complex measurements $S_i$ and $\overline{S}_i$; this translates to using equal weights for the measurements $P_i$ and $Q_i$ as demonstrated in the appendix. Non-equal weights can be modeled using realvalued measurements, at the expense of having more filling in the G-matrix. real-valued measurements: voltage magnitudes $(|u_i|)$, current magnitudes $(|i_{ij}|)$, individual real or reactive power measurements $(P_{ij}$ or $Q_{ij})$, and the voltage slack reference as a pseudo-measurement, Let the vector of measurement functions and measurement values be partitioned as follows:

$$h(x,\overline{x}) = \begin{bmatrix} c(x,\overline{x}) \\ \overline{c}(x,\overline{x}) \\ d(x,\overline{x}) \end{bmatrix}, \quad z = \begin{bmatrix} z_c \\ \overline{z}_c \\ z_d \end{bmatrix} \qquad (27)$$

where $c(x,\overline{x})$ is the vector of complex-valued measurement functions, $d(x,\overline{x})$ is the vector of real-valued measurement functions, $z_c$ is the vector of complex-valued measurement values, and $z_d$ is the vector of real-valued measurement values; note that complex-valued measurement functions/values are also represented in (10) by their complex conjugates: $\overline{c}(x,\overline{x})\overline{z}_c$. The residual error vector is ($r_d$ denotes a vector of real numbers):

$$r = z - h(x^*, \overline{x}^*) = \begin{bmatrix} r_c \\ \overline{r}_c \\ r_d \end{bmatrix} \qquad (28)$$

From the definition of the Wirtinger derivatives (2) and (3), it is straightforward to show the following identities: For a complex-valued function $c_j(x,\overline{x})$:

$$\frac{\partial \overline{c}_j}{\partial x_k} = \overline{\left(\frac{\partial c_j}{\partial \overline{x}_k}\right)}$$

$$\frac{\partial \overline{c}_j}{\partial \overline{x}_k} = \overline{\left(\frac{\partial c_j}{\partial x_k}\right)} \tag{29}$$

- For a real-valued function $d_j(x,\overline{x})$:

$$\frac{\partial d_j}{\partial \overline{x}_k} = \overline{\left(\frac{\partial d_j}{\partial x_k}\right)} \tag{30}$$

Using (29) and (30), the H-matrix can be written in compact form as:

$$H = \begin{bmatrix} C_x & C_{\overline{x}} \\ \overline{C}_{\overline{x}} & \overline{C}_x \\ D_x & \overline{D}_x \end{bmatrix} \tag{31}$$

where $C_x$, $\overline{C}_x$, and $D_x$ are the Jacobian matrices of $c(x,\overline{x})$, $\overline{c}(x,\overline{x})$, and $d(x,\overline{x})$; $\overline{C}_x$, $\overline{C}_x$, and $\overline{D}_x$ are the conjugate Jacobian matrices of $c(x,\overline{x})$, $\overline{c}(x,\overline{x})$, and $d(x,\overline{x})$ Therefore, the components of the ß-vector (18) and G-matrix (19) are:

$$\beta_{\overline{x}} = \overline{C}_x^T r_c + C_{\overline{x}}^T \overline{r}_c + \overline{D}_x^T r_d$$

$$\beta_x = \overline{C}_{\overline{x}}^T r_c + C_x^T \overline{r}_c + D_x^T r_d \tag{32}$$

$$G_{\overline{x}x} = \overline{C}_x^T C_x + C_{\overline{x}}^T \overline{C}_{\overline{x}} + \overline{D}_x^T D_x$$

$$G_{\overline{x}\overline{x}} = \overline{C}_x^T C_{\overline{x}} + C_{\overline{x}}^T \overline{C}_x + \overline{D}_x^T \overline{D}_x$$

$$G_{xx} = \overline{C}_{\overline{x}}^T C_x + C_x^T \overline{C}_{\overline{x}} + D_x^T D_x$$

$$G_{x\overline{x}} = \overline{C}_{\overline{x}}^T C_{\overline{x}} + C_x^T \overline{C}_x + D_x^T \overline{D}_x \tag{33}$$

It is now straightforward to verify that **G and** $\beta$ satisfy the following properties: $\beta_x = \overline{\beta}_{\overline{x}}$, $G_{x\overline{x}} = \overline{G}_{\overline{x}x} = G_{\overline{x}x}^T$, and $G_{xx} = G_{xx}^T = \overline{G}_{\overline{x}\overline{x}} = \overline{G}_{\overline{x}\overline{x}}^T$. In addition, network observability asserts that the G-matrix is of full rank. Therefore, the result of Theorem 1 for the computation of the complex Gauss-Newton step (20) and the corresponding algorithm in Fig. 1 are applicable for hybrid state estimation. The components of h and H for the different measurement types are given in the appendix. It is important to observe the simplicity of the gradient and co-gradient components of H as compared to using rectangular or polar coordinates, particularly for phasor current measurements.

## V. NUMERICAL RESULTS

The proposed state estimator was programmed in C++ using complex variables (C), where the calculations were carried out using solvers developed in house via the SIMD instruction set [27]. The numerical tests were executed on a PC with an i5-6600k CPU and 8 GB of RAM. The termination

Table I: Measurement Standard Deviations

| SCADA Measurements | | | PMU Measurements | | |
|---|---|---|---|---|---|
| voltage | injected power | power flows | voltage | current | phase angle |
| 0.2% | 2% | 2% | 0.02% | 0.03% | 0.01° |

Table II: Test Instances and Comparison of the Real [15] and Complex SE Algorithms

| Net. | Net. Information | | #Measurements | | #Iter. | | Time [ms] | | SUF |
|---|---|---|---|---|---|---|---|---|---|
| | #nodes | #branches | PMU | SCADA | $\mathbb{R}$ | $\mathbb{C}$ | $\mathbb{R}$ | $\mathbb{C}$ | |
| ieee 118 | 118 | 186 | 7 | 372 | 4 | 4 | 2.0 | 1.1 | 1.8 |
| | 118 | 186 | 38 | 372 | 4 | 3 | 2.1 | 1.0 | 2.1 |
| | 118 | 186 | 189 | 372 | 4 | 3 | 5.7 | 1.2 | 4.8 |
| | 118 | 186 | 304 | 0 | 2 | 1 | 2.2 | 0.4 | 6.3 |
| 1888rte | 1888 | 2531 | 2 | 5060 | 4 | 5 | 25.4 | 24.0 | 1.1 |
| | 1888 | 2531 | 158 | 5060 | 6 | 4 | 47.2 | 20.7 | 2.3 |
| | 1888 | 2531 | 1348 | 5060 | 5 | 4 | 157.3 | 22.3 | 7.1 |
| | 1888 | 2531 | 4419 | 0 | 2 | 1 | 167.9 | 5.3 | 31.7 |
| 9241-pegase | 9241 | 16049 | 106 | 32098 | 5 | 5 | 390.1 | 312.7 | 1.2 |
| | 9241 | 16049 | 2045 | 32098 | 5 | 5 | 1463.6 | 308.6 | 4.7 |
| | 9241 | 16049 | 8091 | 32098 | 5 | 5 | 4785.3 | 311.4 | 15.4 |
| | 9241 | 16049 | 25290 | 0 | 2 | 1 | 6660.5 | 50.3 | 132.5 |

tolerance $\varepsilon$ in Fig. 1 was set to $10^{-6}$ per-unit, The testing was carried out on the IEEE 118 test network (IEEE 118), a 1888 node network representing the French very high-voltage grid (1 888rte), and a 9241 node network representing part of the of the European high voltage transmission network and stemming from the Pan European Grid Advanced Simulation and State Estimation (PEGASE) project (9241 PEGASE) [28]. For each of these three networks, four measurement sets were considered with increasing number of PMU synchronized measurements; the last measurement set for each network has measurements only from PMUs. A comparison was carried out with the real variable ($\mathbb{R}$) implementation of the hybrid constrained state estimator [15], which is a recently proposed estimator that handles both SCADA and PMU measurements. The state vector in this estimator includes all node voltage magnitudes and angles in addition to an auxiliary state vector composed of the polar form of the measured branch currents. The measurement noise was considered to be Gaussian distributed with zero mean and a standard deviation as given in Table I, which also conforms to measurement uncertainties as simulated in [15]. The main characteristics of the networks, the measurement sets, and comparative results are given in Table II. Columns 2 and 3 show the basic network information: the number of nodes and the number of branches. The number of PMU and SCADA measurements are given in columns 4 and 5; the weights of the synchronized measurements are set to five times the weights of the SCADA measurements.

Columns 6 to 9 show the number of iterations and the execution time of two methods ($\mathbb{R}$ and $\mathbb{C}$): the hybrid

constrained state estimator implemented in real variables ($\mathbb{R}$) [15] and the proposed complex variable state estimator

($\mathbb{C}$). The last column in Table II shows the speed-up factor (SUF), which is the ratio of the execution time of the real variable state estimator to the execution time of the complex variable state estimator. It is evident from these results that the execution time of the complex variable estimator is not much affected by the

**Table III: Performance Accuracy Indices**

| Net. | Measurements | | $\sigma_u^2$ | | $\xi_z$ | |
|---|---|---|---|---|---|---|
| | #PMU | #SCADA | $\mathbb{R}$ | $\mathbb{C}$ | $\mathbb{R}$ | $\mathbb{C}$ |
| ieee118 | 189 | 372 | 0.0002197 | 0.0018155 | 0.829201 | 0.631715 |
| 1888rte | 1348 | 5060 | 0.0051002 | 0.0045583 | 0.779393 | 0.717508 |
| 9241 pegase | 8091 | 32098 | 0.0351899 | 0.0101625 | 0.700421 | 0.582348 |

increasing number of synchronized measurements relative to the number of SCADA measurements; this is unlike the case of the hybrid constrained state estimator. For the case with only synchronized measurements (# SCADA measurements =0), the complex variable implementation converges in one iteration and requires 50 ms for the 9241 node network; the corresponding real variable implementation requires two iterations due to the handling of equality constraints, and this gives rise to the highest SUF in favor of the complex variable implementation. To assess the accuracy of the state estimator solutions, two performance indices (34)-(35) are averaged over 100 Monte-Carlo simulations involving different values of measurement errors sampled from the distributions [15]:

$$\sigma_u^2 = \sum_{i=1}^{n} \left| u_i^{estimated} - u_i^{true} \right|^2 \tag{34}$$

$$\xi_z = \frac{\sum_{i=1}^{m} \left| z_i^{estimated} - z_i^{true} \right|^2}{\sum_{i=1}^{m} \left| z_i^{measured} - z_i^{true} \right|^2} \tag{35}$$

Table III summarizes the average performance indices for the third instance of each test case, which has the largest number of synchronized measurements simulated together with the SCADA measurements; the results show that the estimation accuracy from the proposed complex variable estimator is as good as if not better than the real variable implementation in [15].

VI. CONCLUSION

This approach employs the complex Taylor series expansion, which is based on Wirtinger calculus, to generalize the real number WLS state estimation to complex variables. The WLS state estimator in complex variables is very simple to implement as compared to the real Gauss-Newton estimator, particularly with hybrid measurement sets involving phasor current measurements. The complex Gauss-Newton solution method is compared with the constrained hybrid state estimator in real variables [15]. The numerical results demonstrate that the complex variable WLS estimator is faster than the real variable constrained state estimator; the speed up level increases with the number of PMU measurements relative to the SCADA measurement, and it is most pronounced for PMU-only WLS state estimation. In terms of estimation accuracy, the complex variable state estimator is competitive with the real variable implementation.

APPENDIX

COMPLEX VALUED MEASUREMENTS

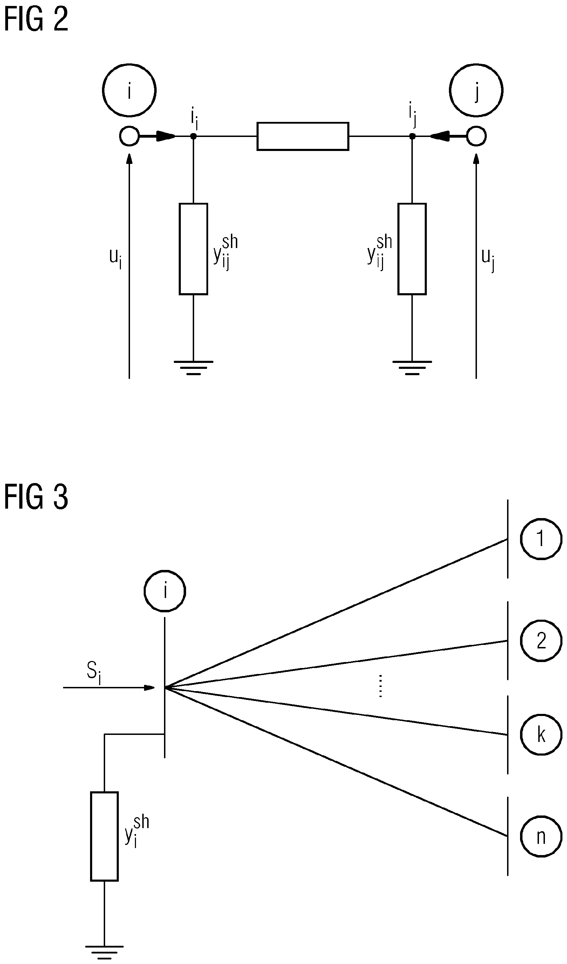

Complex Power Flow Measurements: Consider the branch model shown in Fig. 2. The phasor current at node i and its conjugate are:

$$\begin{aligned} i_{ij} &= y_{ii}^{br} u_i + y_{ij}^{br} u_j \\ \bar{i}_{ij} &= \bar{y}_{ii}^{br} \bar{u}_i + \bar{y}_{ij}^{br} \bar{u}_j \end{aligned} \tag{36}$$

**where**

$$y_{ii}^{br} = y_{ij} + y_{ij}^{sh}; \quad y_{ij}^{br} = -y_{ij} \tag{37}$$

The corresponding complex power flow from node i to node j is :

$$S_{ij} = u_i \bar{i}_{ij} \tag{38}$$

In terms of the phasor voltages, the complex powers and their conjugates can be written (using (36)) as:

$$S_{ij} = u_i \left( \bar{u}_i \bar{y}_{ii}^{br} + \bar{u}_j \bar{y}_{ij}^{br} \right)$$
$$\bar{S}_{ij} = \bar{u}_i \left( u_i y_{ii}^{br} + u_j y_{ij}^{br} \right) \tag{39}$$

Equation (39) gives part of the entries of $h(x,\bar{x})$ in (10). The corresponding elements in the H-matrix (13) are given by:

$$\frac{\partial S_{ij}}{\partial u_i} = \bar{u}_i \bar{y}_{ii}^{br} + \bar{u}_j \bar{y}_{ij}^{br} = \bar{i}_{ij}$$
$$\frac{\partial S_{ij}}{\partial u_j} = 0$$
$$\frac{\partial S_{ij}}{\partial \bar{u}_i} = u_i \bar{y}_{ii}^{br}$$
$$\frac{\partial S_{ij}}{\partial \bar{u}_j} = u_i \bar{y}_{ij}^{br} \tag{40}$$

$$\frac{\partial \bar{S}_{ij}}{\partial u_i} = \bar{u}_i y_{ii}^{br} = \overline{\left( \frac{\partial S_{ij}}{\partial \bar{u}_i} \right)}$$
$$\frac{\partial \bar{S}_{ij}}{\partial u_j} = \bar{u}_i y_{ij}^{br} = \overline{\left( \frac{\partial S_{ij}}{\partial \bar{u}_j} \right)}$$
$$\frac{\partial \bar{S}_{ij}}{\partial \bar{u}_i} = i_{ij} = \overline{\left( \frac{\partial S_{ij}}{\partial u_i} \right)}$$
$$\frac{\partial \bar{S}_{ij}}{\partial \bar{u}_j} = 0 \tag{41}$$

Complex Power Injection Measurements: With reference to the node representation in Fig. 3, consider the complex injection power and its conjugate:

$$S_i = P_i + iQ_i = u_i \overline{Y}_{ii} \overline{u}_i + u_i \sum_{\substack{k=1 \\ k \neq i}}^{n} \overline{Y}_{ik} \overline{u}_k$$

$$\overline{S}_i = P_i - iQ_i = \overline{u}_i Y_{ii} u_i + \overline{u}_i \sum_{\substack{k=1 \\ k \neq i}}^{n} Y_{ik} u_k$$

$$(42)$$

**where**

$$Y_{ii} = y_i^{sh} + \sum_{\substack{k=1 \\ k \neq i}}^{n} y_{ik}, \quad Y_{ik} = -y_{ik}, \quad k \neq i \qquad (43)$$

The corresponding elements of the Jacobian and conjugate Jacobian elements in H are:

$$\frac{\partial S_i}{\partial u_i} = \overline{Y}_{ii} \overline{u}_i + \sum_{\substack{k=1 \\ k \neq i}}^{n} \overline{Y}_{ik} \overline{u}_k$$

$$\frac{\partial S_i}{\partial u_k} = 0, \quad k \neq i$$

$$\frac{\partial S_i}{\partial \overline{u}_i} = \overline{Y}_{ii} u_i$$

$$\frac{\partial S_i}{\partial \overline{u}_k} = \overline{Y}_{ik} u_i, \quad k \neq i$$

$$(44)$$

$$\frac{\partial \overline{S}_i}{\partial u_i} = Y_{ii} \overline{u}_i = \overline{\left( \frac{\partial S_i}{\partial \overline{u}_i} \right)}$$

$$\frac{\partial \overline{S}_i}{\partial u_k} = Y_{ik} \overline{u}_i = \overline{\left( \frac{\partial S_i}{\partial \overline{u}_k} \right)}, \quad k \neq i$$

$$\frac{\partial \overline{S}_i}{\partial \overline{u}_i} = Y_{ii} u_i + \sum_{\substack{k=1 \\ k \neq i}}^{n} Y_{ik} u_k = \overline{\left( \frac{\partial S_i}{\partial u_i} \right)}$$

$$(45)$$

$$\frac{\partial \overline{S}_i}{\partial \overline{u}_k} = 0, \quad k \neq i$$

Phasor Voltage Measurements: For a phasor voltage measurement $u_i$ and it conjugate $\overline{u}_i$. the Jacobian and

conjugate Jacobian elements in H are:

$$\frac{\partial u_i}{\partial u_i} = 1, \quad \frac{\partial u_i}{\partial \overline{u}_i} = 0 \tag{46}$$

$$\frac{\partial \overline{u}_i}{\partial u_i} = 0, \quad \frac{\partial \overline{u}_i}{\partial \overline{u}_i} = 1 \tag{47}$$

Phasor Current Measurements: For a phasor current measurement $i_{ij}$ and it conjugate $\overline{i}_{ij}$ (36), the Jacobian and conjugate Jacobian elements in H are:

$$\begin{aligned} \frac{\partial i_{ij}}{\partial u_i} &= y_{ii}^{br} \\ \frac{\partial i_{ij}}{\partial u_j} &= y_{ij}^{br} \\ \frac{\partial i_{ij}}{\partial \overline{u}_i} &= 0 \\ \frac{\partial i_{ij}}{\partial \overline{u}_j} &= 0 \end{aligned} \tag{48}$$

$$\begin{aligned} \frac{\partial \overline{i}_{ij}}{\partial u_i} &= 0 \\ \frac{\partial \overline{i}_{ij}}{\partial u_j} &= 0 \\ \frac{\partial \overline{i}_{ij}}{\partial \overline{u}_i} &= \overline{y}_{ii}^{br} = \overline{\left(\frac{\partial i_{ij}}{\partial u_i}\right)} \\ \frac{\partial \overline{i}_{ij}}{\partial \overline{u}_j} &= \overline{y}_{ij}^{br} = \overline{\left(\frac{\partial i_{ij}}{\partial u_j}\right)} \end{aligned} \tag{49}$$

REAL-VALUED MEASUREMENTS

Voltage Magnitude Measurements: The nodal voltage magnitude measurement can be modeled using the phasor voltage and its complex conjugate:

$$|u_i| = \sqrt{u_i \overline{u}_i} \tag{50}$$

The corresponding Jacobian and conjugate Jacobian elements in H are:

$$\frac{\partial \left|u_i\right|}{\partial u_i} = \frac{1}{2}\sqrt{\frac{\overline{u_i}}{u_i}} = \frac{1}{2}\angle - \delta_i \tag{51}$$

$$\frac{\partial \left|u_i\right|}{\partial \overline{u}_i} = \frac{1}{2}\sqrt{\frac{u_i}{\overline{u}_i}} = \frac{1}{2}\angle \delta_i = \overline{\left(\frac{\partial \left|u_i\right|}{\partial u_i}\right)} \tag{52}$$

where $\delta_i$ is the angle of the phasor voltage. Current Magnitude Measurements: The current magnitude measurement can be modeled using the phasor current and its complex conjugate:

$$\left|i_{ij}\right| = \sqrt{i_{ij}\overline{i}_{ij}} \tag{53}$$

Using (48)-(49) and the chain rule [22] gives the corresponding Jacobian and conjugate Jacobian elements in H:

$$\frac{\partial \left|i_{ij}\right|}{\partial u_i} = \frac{1}{2}\sqrt{\frac{\overline{i}_{ij}}{i_{ij}}}\frac{\partial i_{ij}}{\partial u_i} = \frac{y_{ii}^{br}}{2}\sqrt{\frac{\overline{i}_{ij}}{i_{ij}}} = \frac{y_{ii}^{br}}{2}1\angle - \theta_{ij}$$
$$\frac{\partial \left|i_{ij}\right|}{\partial u_j} = \frac{1}{2}\sqrt{\frac{\overline{i}_{ij}}{i_{ij}}}\frac{\partial i_{ij}}{\partial u_j} = \frac{y_{ij}^{br}}{2}\sqrt{\frac{\overline{i}_{ij}}{i_{ij}}} = \frac{y_{ij}^{br}}{2}1\angle - \theta_{ij} \tag{54}$$

$$\frac{\partial \left|i_{ij}\right|}{\partial \overline{u}_i} = \frac{1}{2}\sqrt{\frac{i_{ij}}{\overline{i}_{ij}}}\frac{\partial \overline{i}_{ij}}{\partial \overline{u}_i} = \frac{\overline{y}_{ii}^{br}}{2}\sqrt{\frac{i_{ij}}{\overline{i}_{ij}}} = \frac{\overline{y}_{ii}^{br}}{2}1\angle \theta_{ij} = \overline{\left(\frac{\partial \left|i_{ij}\right|}{\partial u_i}\right)}$$
$$\frac{\partial \left|i_{ij}\right|}{\partial \overline{u}_j} = \frac{1}{2}\sqrt{\frac{i_{ij}}{\overline{i}_{ij}}}\frac{\partial \overline{i}_{ij}}{\partial \overline{u}_j} = \frac{\overline{y}_{ij}^{br}}{2}\sqrt{\frac{i_{ij}}{\overline{i}_{ij}}} = \frac{\overline{y}_{ij}^{br}}{2}1\angle \theta_{ij} = \overline{\left(\frac{\partial \left|i_{ij}\right|}{\partial u_j}\right)} \tag{55}$$

where $\theta_{ij}$ is the angle of the phasor current. Real Power Flow Measurements: A real power flow measurement can be expressed as:

$$P_{ij} = \frac{1}{2}\left(S_{ij} + \overline{S}_{ij}\right) \tag{56}$$

The corresponding Jacobian and conjugate Jacobian elements in $H$ are of the form $\frac{1}{2}\left(\frac{\partial S_{ij}}{\partial \bullet} + \frac{\partial \overline{S}_{ij}}{\partial \bullet}\right),$ where the partial derivatives are given by (40)-(41).

*Reactive Power Flow Measurements:* A reactive power flow measurement can be expressed as:

$$Q_{ij} = \frac{i}{2}\left(\overline{S}_{ij} - S_{ij}\right) \tag{57}$$

The corresponding Jacobian and conjugate Jacobian elements in *H* are of the form $\frac{1}{2}\left(\frac{\partial \overline{S}_{ij}}{\partial \bullet} - \frac{\overline{\partial S_{ij}}}{\partial \bullet}\right)$, where the partial derivatives are given by (40)-(41).

*Slack Angle:* The slack angle reference corresponds to setting the imaginary part of the reference bus voltage to zero, i.e:

$$u_s^{im} = \frac{i}{2}\left(\overline{u}_s - u_s\right) = 0 \tag{58}$$

The corresponding Jacobian and conjugate Jacobian elements in *H* are:

$$\frac{\partial u_s^{im}}{\partial u_s} = -\frac{i}{2} \tag{59}$$

$$\frac{\partial u_s^{im}}{\partial \overline{u}_s} = \frac{i}{2} = \overline{\left(\frac{\partial u_s^{im}}{\partial u_s}\right)} \tag{60}$$

OBJECTIVE FUNCTION TERM: COMPLEX MEASUREMENT AND ITS CONJUGATE

Consider a complex power injection $(P_i + iQ_i)$ measurement and its conjugate $(P_i - iQ_i)$, each having the weight $W_{ii}$. Let $\ell_{S_i}$ and $\overline{\ell}_{S_i}$ denote the linearized complex measurement function around an initial estimate and its conjugate

$(\ell_{S_i} = S_i(x^*, \overline{x}^*) + \left[\nabla_x S_i^T, \nabla_{\overline{x}} S_i^T\right][\Delta x; \Delta \overline{x}]$, $\overline{\ell}_{S_i} = \overline{S}_i(x^*, \overline{x}^*) + \left[\overline{\nabla_{\overline{x}} S_i^T}, \overline{\nabla_x S_i^T}\right][\Delta x; \Delta \overline{x}])$; the corresponding term in the WLS objective is:

$$\ell_i = W_{ii}\overline{\left(P_i + iQ_i - \ell_{S_i}\right)}\left(P_i + iQ_i - \ell_{S_i}\right)$$
$$+ W_{ii}\overline{\left(P_i - iQ_i - \overline{\ell}_{S_i}\right)}\left(P_i - iQ_i - \overline{\ell}_{S_i}\right) \tag{61}$$
$$= 2W_{ii}\left(P_i + iQ_i - \ell_{S_i}\right)\left(P_i - iQ_i - \overline{\ell}_{S_i}\right)$$

By writing $\ell_{S_i} = \frac{\left(\ell_{S_i}+\overline{\ell}_{S_i}\right)}{2} - \frac{\left(\overline{\ell}_{S_i}-\ell_{S_i}\right)}{2}$ and $\overline{\ell}_{S_i} = \frac{\left(\ell_{S_i}+\overline{\ell}_{S_i}\right)}{2} + \frac{\left(\overline{\ell}_{S_i}-\ell_{S_i}\right)}{2}$, (61) can be simplified to:

$$\ell_i = 2W_{ii}\left(\frac{\ell_{S_i}+\overline{\ell}_{S_i}}{2} - P_i\right)^2 + 2W_{ii}\left(i\frac{\overline{\ell}_{S_i}-\ell_{S_i}}{2} - Q_i\right)^2 \tag{62}$$

Therefore the use of complex conjugate measurements (61) in WLS translates to using equal weights for the real and imaginary components of the measurement.

Therefore the use of complex conjugate measurements (61) in WLS translates to using equal weights for the real and imaginary components of the measurement.

The following references have been cited in the example embodiment above:

REFERENCES

[1] K. E. Martin, D. Hamai, M. G. Adamiak, S. Anderson, M. Begovic, G. Benmouyal, G. Brunello, J. Burger, J. Y. Cai, B. Dickerson, V. Gharpure, B. Kennedy, D. Karlsson, A. G. Phadke, J. Salj, V. Skendzic, J. Sperr, Y. Song, C. Huntley, B. Kasztenny, and E. Price, "Exploring the IEEE standard C37.118-2005 synchrophasors for power systems," IEEE Trans. Power Deliv., vol. 23, no. 4, pp. 1805-1811, Oct. 2008.

[2] A. Gomez-Exposito, A. Abur, P. Rousseaux, A. de la Villa Jaen, and C. Gomez-Quiles, "On the use of PMUs in power system state estimation," in 17th Power Systems Computation Conference, Aug. 2011, pp. 1-13.

[3] L. Vanfretti, J. H. Chow, S. Sarawgi, and B. Fardanesh, "A phasor-data-based state estimator incorporating phase bias correction," IEEE Trans. Power Syst., vol. 26, no. 1, pp. 111-119, Feb. 2011.

[4] M. Göl and A. Abur, "LAV based robust state estimation for systems measured by PMUs," IEEE Trans. Smart Grid, vol. 5, no. 4, pp. 1808-1814, Jul. 2014.

[5] ---, "A fast decoupled state estimator for systems measured by PMUs," IEEE Trans. Power Syst., vol. 30, no. 5, pp. 2766-2771, Sep. 2015.

[6] E. R. Fernandes, S. G. Ghiocel, J. H. Chow, D. E. Ilse, D. D. Tran, Q. Zhang, D. B. Bertagnolli, X. Luo, G. Stefopoulos, B. Fardanesh, and R. Robertson, "Application of a phasor-only state estimator to a large power system using real PMU data," IEEE Trans. Power Syst., vol. 32, no. 1, pp. 411-420, Jan. 2017.

[7] M. Zhou, V. A. Centeno, J. S. Thorp, and A. G. Phadke, "An alternative for including phasor measurements in state estimators," IEEE Trans. Power Syst., vol. 21, no. 4, pp. 1930-1937, Nov. 2006.

[8] R. F. Nuqui and A. G. Phadke, "Hybrid linear state estimation utilizing synchronized phasor measurements," in 2007 IEEE Lausanne Power Tech., Jul. 2007, pp. 1665-1669.

[9] Y. Cheng, X. Hu, and B. Gou, "A new state estimation using synchronized phasor measurements," in 2008 IEEE International Symposium on Circuits and Systems, May 2008, pp. 2817-2820.

[10] R. Baltensperger, A. Loosli, H. Sauvain, M. Zima, G. Andersson, and R. Nuqui, "An implementation of two-stage hybrid state estimation with limited number of PMU," in 10th IET International Conference on Developments in Power System Protection (DPSP 2010), Mar. 2010, pp. 1-5.

[11] A. Simões Costa, A. Albuquerque, and D. Bez, "An estimation fusion method for including phasor measurements into power system real-time modeling," IEEE Trans. Power Syst., vol. 28, no. 2, pp. 1910-1920, May 2013.

[12] T. Wu, C. Y. Chung, and I. Kamwa, "A fast state estimator for systems including limited number of PMUs," IEEE Trans. Power Syst., vol. PP. no. 99, 2017.

[13] T. Bi. X. Qin, and Q. Yang, "A novel hybrid state estimator for including synchronized phasor measurements," Elec. Power Syst. Res., vol. 78, no. 8, pp. 1343-1352, Aug. 2008.

[14] S. Chakrabarti, E. Kyriakides, G. Ledwich, and A. Ghosh, "Inclusion of PMU current phasor measurements in a power system state estimator," IET Gener. Transm. Distrib., vol. 4, no. 10, pp. 1104-1115, Oct. 2010.

[15] G. Valverde, S. Chakrabarti, E. Kyrialddes. and V. Terzija, "A constrained formulation for hybrid state estimation," IEEE Trans. Power Syst., vol. 26, no. 3, pp. 1102-1109, Aug. 2011.

[16] M. Glavic and T. Van Cutsem, "Reconstructing and tracking network stale from a limited number of synchrophasor measurements," IEEE Trans. Power Syst., vol. 28, no. 2, pp. 1921-1929, May 2013.

[17] M. Göl and A. Abur, "A hybrid state estimator for systems with limited number of PMUs," IEEE Trans. Power Syst., vol. 30, no. 3, pp. 1511-1517, May 2015.

[18] L. Sorber, M. V. Barel, and L. D. Lathauwer, "Unconstrained optimization of real functions in complex variables," SIAM Journal on Optimization, vol. 22, no. 3, pp. 879-898, 2012.

[19] W. Wirtinger, "Zur formalen theorie der funktionen von mehr komplexen veranderlichen," Mathematische Annalen, vol. 97, pp. 257-376, 1927.

[20] D. H. Brandwood, "A complex gradient operator and its application in adaptive array theory," IEE Proc. H, Microwaves, Optics and Antennas, vol. 130, no. 1, pp. 11-16, Feb. 1983.

[21] R. F. H. Fischer, Precoding and Signal Shaping for Digital Transmission-Appendix A: Wirtinger Calculus. John Wiley & Sons, Inc., 2002.

[22] K. Kreutz-Dclgado, "The complex gradient operator and the CR-calculus," ArXiv e-prints, arXiv:0906.4835v1, 2009.

[23] M. B. Do Coutto Filho, J. C. S. de Souza, and M. A. Ribeiro Guimaraens, "Enhanced bad data processing by phasor-aided state estimation," IEEE Trans. Power Syst., vol. 29, no. 5, pp. 2200-2209, Sep. 2014.

[24] E. W. S. Angelos and E. N. Asada, "Improving state estimation with real-time external equivalents," IEEE Trans. Power Syst., vol. 31, no. 2, pp. 1289-1296, Mar. 2016.

[25] V. Kekatos and G. B. Giannakis, "Distributed robust power system state estimation," IEEE Trans. Power Syst., vol. 28, no. 2, pp. 1617-1626, May 2013.

[27] C. J. Hughes, Single-Instruction Multiple-Data Execution. Morgan & Claypool, 2015. [Online]. Available: http://ieeexplore.ieee,org/xpl/ articleDetails.sp?arnumber=7123244

[28] C. Josz, S. Fliscounakis, J. Maeght, and P. Panciatici, "AC power flow data in MATPOWER and QCQP format: iTesla, RTE snapshots, and PEGASE," ArXiv e-prints, arXiv:1603.01533, 2016.

**Claims**

1. Method for control of an electrical energy network, including a step of
   Calculation of a state estimation signal for the electrical energy network,
   **characterized in that**
   the calculation is performed using a weighted least squares optimization with complex variables.

2. Method according to claim 1, **characterized in that** the weighted least squares optimization uses Wirtinger calculus.

3. Method according to claim 2, **characterized in that** measurements from phasor measurement units are directly included as complex variables in the weighted least squares optimization.

4. Method according to one of the preceding claims, **characterized by** the additional steps:

   - Computation of control signals for controllable equipment in the electrical energy network based on the state estimation signal,
   - Sending the control signals to the controllable equipment,
   - controlling the controllable equipment with the control signals to operate the electrical energy network.

5. Apparatus for control of an electrical energy network, with
   a computing device suitable for calculation of a state estimation signal for the electrical energy network, **characterized in that**
   the computing device is equipped to perform the calculation using a weighted least squares optimization with complex variables.

6. Apparatus according to claim 5, **characterized in that** the computing device is equipped to use Wirtinger calculus for the weighted least squares optimization.

7. Apparatus according to claim 6, **characterized in that** Apparatus is equipped to receive measurements from phasor measurement units and directly include these measurements as complex variables in the weighted least squares optimization.

8. Apparatus according to one of the preceding claims, **characterized in that**
   the computing device is equipped for computation of control signals for controllable equipment in the electrical energy network based on the state estimation signal, and
   a communication device is equipped for sending the control signals to controllable equipment in the electrical energy network, so that the controllable equipment is operated with the control signals.

9. Apparatus according to claim 6, **characterized in that** the control device is equipped to compute control signals for controllable equipment including at least one of the equipments: electrical generators, switchable loads, capacitor banks, renewable energy resources, power switches, transformers, tap-operated transformers.

# FIG 1

FIG 2

FIG 3

Europäisches
Patentamt

European
Patent Office

Office européen
des brevets

## EUROPEAN SEARCH REPORT

Application Number

EP 18 17 6823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DZAFIC IZUDIN ET AL: "Hybrid State Estimation in Complex Variables", IEEE TRANSACTIONS ON POWER SYSTEMS, IEEE SERVICE CENTER, PISCATAWAY, NJ, US, vol. 33, no. 5, 23 January 2018 (2018-01-23), pages 5288-5296, XP011689060, ISSN: 0885-8950, DOI: 10.1109/TPWRS.2018.2794401 [retrieved on 2018-08-22] * Sections I to VI; figures 1-3 * | 1-9 | INV. H02J3/00 |
| Y | ABLAKOVIC DINO ET AL: "Experience in distribution state estimation preparation and operation in complex radial distribution networks", 2014 IEEE PES GENERAL MEETING ¦ CONFERENCE & EXPOSITION, IEEE, 27 July 2014 (2014-07-27), pages 1-5, XP032670536, DOI: 10.1109/PESGM.2014.6939819 [retrieved on 2014-10-29] * Section I, * | 1-9 | |
| A | CN 105 512 502 A (UNIV CHONGQING) 20 April 2016 (2016-04-20) * the whole document * | 1-9 | TECHNICAL FIELDS SEARCHED (IPC)<br><br>H02J |

-/--

The present search report has been drawn up for all claims

| Place of search | Date of completion of the search | Examiner |
|---|---|---|
| Munich | 13 November 2018 | Chaumeron, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 17 6823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHAKRABARTI S ET AL: "Inclusion of PMU current phasor measurements in a power system state estimator", IET GENERATION, TRANSMISSION & DISTRIBU,, vol. 4, no. 10, 1 October 2010 (2010-10-01), pages 1104-1115, XP006036313, ISSN: 1751-8695, DOI: 10.1049/IET-GTD:20090398 * Sections 1 to 5; figures 1,2 * | 1-9 | |
| A | CN 104 184 144 A (STATE GRID CORP CHINA; CHINA ELECTRIC POWER RES INST; STATE GRID TIANJ) 3 December 2014 (2014-12-03) * the whole document * | 1-9 | |

TECHNICAL FIELDS
SEARCHED      (IPC)

The present search report has been drawn up for all claims

| Place of search | Date of completion of the search | Examiner |
|---|---|---|
| Munich | 13 November 2018 | Chaumeron, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 18 17 6823

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2018

| Patent document cited in search report | | Publication date | Patent family member(s) | Publication date |
|---|---|---|---|---|
| CN 105512502 | A | 20-04-2016 | NONE | |
| CN 104184144 | A | 03-12-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. E. MARTIN ; D. HAMAI ; M. G. ADAMIAK ; S. ANDERSON ; M. BEGOVIC ; G. BENMOUYAL ; G. BRUNELLO ; J. BURGER ; J. Y. CAI ; B. DICKERSON.** Exploring the IEEE standard C37.118-2005 synchrophasors for power systems. *IEEE Trans. Power Deliv.,* October 2008, vol. 23 (4), 1805-1811
- **A. GÓMEZ-EXPÓSITO ; A. ABUR ; P. ROUSSEAUX ; A. DE LA VILLA JAEN ; C. GÓMEZ-QUILES.** On the use of PMUs in power system state estimation. *17th Power Systems Computation Conference,* August 2011, 1-13
- **L. VANFRETTI ; J. H. CHOW ; S. SARAWGI ; B. FARDANESH.** A phasor-data-based state estimator incorporating phase bias correction. *IEEE Trans. Power Syst.,* February 2011, vol. 26 (1), 111-119
- **M. GÖL ; A. ABUR.** LAV based robust state estimation for systems measured by PMUs. *IEEE Trans. Smart Grid,* July 2014, vol. 5 (4), 1808-1814
- A fast decoupled state estimator for systems measured by PMUs. *IEEE Trans. Power Syst.,* September 2015, vol. 30 (5), 2766-2771
- **E. R. FERNANDES ; S. G. GHIOCEL ; J. H. CHOW ; D. E. ILSE ; D. D. TRAN ; Q. ZHANG ; D. B. BERTAGNOLLI ; X. LUO ; G. STEFOPOULOS ; B. FARDANESH.** Application of a phasor-only state estimator to a large power system using real PMU data. *IEEE Trans. Power Syst.,* January 2017, vol. 32 (1), 411-420
- **M. ZHOU ; V. A. CENTENO ; J. S. THORP ; A. G. PHADKE.** An alternative for including phasor measurements in state estimators. *IEEE Trans. Power Syst.,* November 2006, vol. 21 (4), 1930-1937
- **R. F. NUQUI ; A. G. PHADKE.** Hybrid linear state estimation utilizing synchronized phasor measurements. *2007 IEEE Lausanne Power Tech.,* July 2007, 1665-1669
- **Y. CHENG ; X. HU ; B. GOU.** A new state estimation using synchronized phasor measurements. *2008 IEEE International Symposium on Circuits and Systems,* May 2008, 2817-2820
- **R. BALTENSPERGER ; A. LOOSLI ; H. SAUVAIN ; M. ZIMA ; G. ANDERSSON ; R. NUQUI.** An implementation of two-stage hybrid state estimation with limited number of PMU. *10th IET International Conference on Developments in Power System Protection (DPSP 2010),* March 2010, 1-5

- **A. SIMŌES COSTA ; A. ALBUQUERQUE ; D. BEZ.** An estimation fusion method for including phasor measurements into power system real-time modeling. *IEEE Trans. Power Syst.,* May 2013, vol. 28 (2), 1910-1920
- **T. WU ; C. Y. CHUNG ; I. KAMWA.** A fast state estimator for systems including limited number of PMUs. *IEEE Trans. Power Syst.,* 2017, vol. PP (99
- **T. BI. X. QIN ; Q. YANG.** A novel hybrid state estimator for including synchronized phasor measurements. *Elec. Power Syst. Res.,* August 2008, vol. 78 (8), 1343-1352
- **S. CHAKRABARTI ; E. KYRIAKIDES ; G. LEDWICH ; A. GHOSH.** Inclusion of PMU current phasor measurements in a power system state estimator. *IET Gener. Transm. Distrib.,* October 2010, vol. 4 (10), 1104-1115
- **G. VALVERDE ; S. CHAKRABARTI ; E. KYRIALDDES ; V. TERZIJA.** A constrained formulation for hybrid state estimation. *IEEE Trans. Power Syst.,* August 2011, vol. 26 (3), 1102-1109
- **M. GLAVIC ; T. VAN CUTSEM.** Reconstructing and tracking network stale from a limited number of synchrophasor measurements. *IEEE Trans. Power Syst.,* May 2013, vol. 28 (2), 1921-1929
- **M. GÖL ; A. ABUR.** A hybrid state estimator for systems with limited number of PMUs. *IEEE Trans. Power Syst.,* May 2015, vol. 30 (3), 1511-1517
- **L. SORBER ; M. V. BAREL ; L. D. LATHAUWER.** Unconstrained optimization of real functions in complex variables. *SIAM Journal on Optimization,* 2012, vol. 22 (3), 879-898
- **W. WIRTINGER.** Zur formalen theorie der funktionen von mehr komplexen veranderlichen. *Mathematische Annalen,* 1927, vol. 97, 257-376
- **D. H. BRANDWOOD.** A complex gradient operator and its application in adaptive array theory. *IEE Proc. H, Microwaves, Optics and Antennas,* February 1983, vol. 130 (1), 11-16
- **R. F. H. FISCHER.** Precoding and Signal Shaping for Digital Transmission-Appendix A: Wirtinger Calculus. John Wiley & Sons, Inc, 2002
- **K. KREUTZ-DCLGADO.** *The complex gradient operator and the CR-calculus,* 2009

- **M. B. DO COUTTO FILHO ; J. C. S. DE SOUZA ; M. A. RIBEIRO GUIMARAENS.** Enhanced bad data processing by phasor-aided state estimation. *IEEE Trans. Power Syst.,* September 2014, vol. 29 (5), 2200-2209
- **E. W. S. ANGELOS ; E. N. ASADA.** Improving state estimation with real-time external equivalents. *IEEE Trans. Power Syst.,* March 2016, vol. 31 (2), 1289-1296
- **V. KEKATOS ; G. B. GIANNAKIS.** Distributed robust power system state estimation. *IEEE Trans. Power Syst.,* May 2013, vol. 28 (2), 1617-1626
- **C. J. HUGHES.** Single-Instruction Multiple-Data Execution. Morgan & Claypool, 2015
- **C. JOSZ ; S. FLISCOUNAKIS ; J. MAEGHT ; P. PANCIATICI.** *AC power flow data in MATPOWER and QCQP format: iTesla, RTE snapshots, and PEGASE,* 2016